(19) Europäisches Patentamt / European Patent Office / Office européen des brevets

(11) **EP 3 619 569 B1**

(12) **EUROPEAN PATENT SPECIFICATION**

(45) Date of publication and mention
of the grant of the patent:
**21.01.2026   Bulletin 2026/04**

(21) Application number: **18795052.2**

(22) Date of filing: **03.05.2018**

(51) International Patent Classification (IPC):
**G02B 27/00** *(2006.01)*      **G02B 27/01** *(2006.01)*
**G02B 27/10** *(2006.01)*      **G02B 27/42** *(2006.01)*
**G02B 5/18** *(2006.01)*

(52) Cooperative Patent Classification (CPC):
**G02B 5/1842; G02B 6/0016; G02B 6/0038;
G02B 27/1086;** G02B 2027/0123

(86) International application number:
**PCT/FI2018/050322**

(87) International publication number:
**WO 2018/202951 (08.11.2018 Gazette 2018/45)**

(54) **DISPLAY ELEMENT, PERSONAL DISPLAY DEVICE, METHOD OF PRODUCING AN IMAGE ON A PERSONAL DISPLAY AND USE**

ANZEIGEELEMENT, PERSÖNLICHE ANZEIGEVORRICHTUNG, VERFAHREN ZUR HERSTELLUNG EINES BILDES AUF EINER PERSÖNLICHEN ANZEIGE UND VERWENDUNG

ÉLÉMENT D'AFFICHAGE, DISPOSITIF D'AFFICHAGE PERSONNEL, PROCÉDÉ DE PRODUCTION D'UNE IMAGE SUR UN AFFICHAGE PERSONNEL ET UTILISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.05.2017   FI 20175389**

(43) Date of publication of application:
**11.03.2020   Bulletin 2020/11**

(73) Proprietor: **Dispelix Oy
02130 Espoo (FI)**

(72) Inventors:
• **OLKKONEN, Juuso
02130 Espoo (FI)**

• **SUNNARI, Antti
02130 Espoo (FI)**

(74) Representative: **Laine IP Oy
Porkkalankatu 24
00180 Helsinki (FI)**

(56) References cited:
EP-A1- 3 443 402        EP-A1- 3 500 889
WO-A1-2017/062139      WO-A1-2017/180403
WO-A1-2018/039273      GB-A- 2 526 092
US-A1- 2010 134 534    US-A1- 2010 214 659
US-A1- 2010 231 693    US-A1- 2011 019 874
US-A1- 2011 019 874    US-A1- 2013 314 789
US-A1- 2016 231 570

**Description**

**Field of the Invention**

The invention relates to diffractive display technology. In particular, the invention relates to lightguide-based diffractive displays comprising an in-coupling grating, an exit pupil expander grating and an out-coupling grating. In addition, the invention relates to a method of displaying an image on a diffractive display and a novel use. Specifically, the invention relates to personal displays, such as near-to-eye displays (NEDs) utilizing diffractive gratings.

**Background of the Invention**

The exit pupil of diffractive lightguide-based displays can be expanded using an additional grating, so called exit pupil expander (EPE) grating between the in-coupling grating and out-coupling grating of the display. Typically, as described e.g. in US 6580529 B1, in-coupling gratings of diffractive NEDs utilize a single reflective or transmissive diffraction order, which is guided via an exit pupil expander to an out-coupling grating. To get high in-coupling efficiency, complex grating structures such as slanted or overhanging structures needs to be used to get all light into the diffraction order employed. Some of such advanced grating structures, as well as NED display element geometries, are disclosed in US 2016/0231568 A1.

Maximum field of view (FOV) of a single lightguide with a 2D exit pupil expander depends on the refractive index of the lightguide and the wavelength band of the in-coupled light. When the wavelength band is 460 - 630 nm and lightguide refractive index is 2.0, the maximum FOV is around 33-35 degrees. Currently, the refractive index is limited to 2.0 as glass materials with higher refractive index absorb too much blue light to be usable in lightguides. Typical approach to increase FOV is to stack multiple lightguides on top of each other so that in-coupling gratings of the lightguides are laterally coincident. One approach is to use a single light for each primary color (red, green, blue). In this approach, an RGB image requires three lightguides.

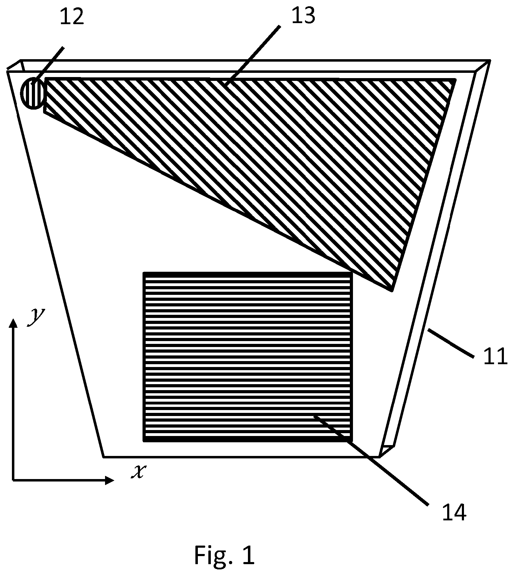

Even with the stacking approach, the prior-art-solutions like those referred to above utilize only a single diffraction order in the in-coupling lead to physically large EPE gratings. This prevents their usage in high FOV (> 40 degrees) wearable NED devices. To exemplify the problem, the display design disclosed in US 2016/0231568 A1 is applied for a monochrome (50-100 nm) wavelength band and a 50 degrees FOV NED display with 15 mm x 10 mm (height x width) eyebox and 20 mm eyerelief, a structure shown in Fig. 1 is obtained. The structure comprises a lightguide 11, an in-coupling grating 12, an exit pupil expander grating 13 and an out-coupling grating 14 on the lightguide 11. Due to the large FOV, the EPE grating 13 is vertically and horizontally bigger than the out-coupling grating 14. The total size of the lightguide is 77 mm x 52 mm (height x width) which is too large for compact eyewear-like NEDs.

Thus, there is a need for improved solutions that allow for producing smaller NEDs with large FOVs.

**Summary of the Invention**

It is an aim of the invention to overcome at least some of the problems of prior art and to provide a novel display element for personal displays. A particular aim is to provide a display element that requires a smaller area than prior art solutions. A specific aim to achieve the same eyebox size and FOV using a smaller lightguide.

An additional aim is also to provide a display element that allows for achieving a higher FOV than conventional solutions.

Additional aims are to provide a personal display device employing such display element, an improved method of displaying images on personal displays and a novel use.

The invention is based on the idea of using more than one diffraction order of the incident light and coupling and guiding the diffraction orders into a waveguide and therein along different paths via different exit pupil expander gratings. This allows for manufacturing small-size display elements without compromising the field of view or even increasing the maximum field of view of the element.

According to one aspect, the present display element for a personal display system comprises a lightguide capable of guiding light by total internal reflections, a diffractive in-coupling grating, and a diffractive out-coupling grating. The in-coupling grating is adapted on the lightguide so that is capable of coupling light directed to the in-coupling grating to the lightguide, where the light propagates to the out-coupling grating for producing a viewable image. According to the invention, the in-coupling grating is adapted to split the incoming light to at least two, in particular two, diffraction wavefronts. The display element further comprises at least two, in particular two, different exit pupil expander gratings, which are positioned on the lightguide laterally displaced with respect to each other so as to guide said wavefronts respectively to the out-coupling grating along different paths. The final viewable image is formed on the single out-coupling grating as a sum of the two wavefronts that propagate via different exit pupil expanders.

The present personal display device, such as near-to-eye display device, comprises an image source for projecting an image and at least one diffractive display element according to any of the preceding claims for displaying the image projected to said in-coupling grating thereof on said out-coupling grating. There may be provided two such display elements, one for each eye of the user. The device can be e.g. an augmented reality display, such as an eyewear-integrated display.

The present method for producing an image on a personal display comprises directing light to an in-coupling grating arranged on a lightguide capable of guiding light laterally by total internal reflections, whereby the light is coupled to the lightguide as two different diffraction wavefronts propagating in different directions. The diffraction wavefronts are guided to two different exit pupil expander gratings for extending the exit pupil of the display. Finally, light is guided from the exit pupil expander gratings to a single out-coupling grating for producing a final viewable image. Typically, light is directed to the in-coupling grating essentially in the normal direction of the plane of the lightguide.

The present use comprises using of diffraction order -based splitting of incident light and recombination of the splitted light for producing an image on a diffractive display element.

More specifically, the invention is characterized by what is stated in the independent claims.

The invention offers significant benefits. First, the invention allows for reducing the lateral size of diffractive display elements. This is because the two exit pupil expanders can be positioned more efficiently on the lightguide than a single bigger exit pupil expander that would provide a comparable FOV. Using embodiments of the invention, the maximum field of view can in fact be further increased compared with traditional gratings and grating layouts. More specifically, the present invention allows even 15% larger field of view (FOV) to be guided in the lightguide than the state-of-the art approaches.

In particular, with the presented in-coupling and exit pupil expander structure, both the first plus and minus orders of the in-coupled light can be utilized, which allows the use of binary gratings that can be manufactured relatively easily without sacrificing efficiency. On the out-coupling grating, the different diffraction order wavefronts are recombined. In comparison to the state-of-the-art approaches, the present invention requires smaller total lightguide area, which in the end enables a better form factor for a NED device.

The dependent claims are directed to selected embodiments of the invention.

In some embodiments, the element comprises two exit pupil expander gratings located laterally essentially on opposite sides of the in-coupling grating. In one embodiment, the gratings are located as fan-shaped zones symmetrically with respect to the in-coupling grating, and preferably in its immediate vicinity, therefore producing a bowtie-like geometry.

In some embodiments, the out-coupling grating is located symmetrically with respect to the exit pupil expander gratings. The grating lines of the gratings are arranged such that the exit pupil expander gratings guide light to the out-coupling grating where the final image is formed.

In some embodiments, the lightguide has a tapering shape, where the in-coupling grating and exit pupil expander gratings are located on the wider end thereof the out-coupling grating on the narrower end thereof. This way, the space of the lightguide is optimally used.

The in-coupling grating is adapted to couple to the substrate two wavefronts by diffracting light into a positive and a corresponding negative diffraction order, respectively. These diffraction orders comprise the first positive and negative transmission order or the first positive and negative reflection order, depending on the positioning of the in-coupling gratin with respect to the lightguide and the image source.

The in-coupling grating comprises a doubly periodic grating. In a typical embodiment, the grating is periodic in two orthogonal directions one of which is aligned with the symmetry axis of the two EPE gratings, which may also be the symmetry axis of the in-coupling grating and/or the out-coupling grating.

The in-coupling grating is periodic both orthogonal lateral directions so that it in-couples light mainly to the first positive and negative orders in the first orthogonal direction and in the first positive or negative order in the other orthogonal direction.

The grating vector or vectors of the in-coupling grating, exit pupil expander gratings and out-coupling grating are chosen such that when said wavefronts are out-coupled from the lightguide by the out-coupling grating, the wavefronts have the same orthogonal wave vector components as when incident on the in-coupling grating.

The wavefronts are each adapted to carry a partial image of a total image directed to the in-coupling grating for increasing the maximum field of view that can propagate on the out-coupling grating. This way, the maximum FOV of the display device can be significantly increased. In some embodiments the field of view of the display element is at least 40 degrees in at least one direction and in particular in the direction in which the diffractive order splitting of the incident light is carried out.

In some embodiments, each of the gratings is arranged on one side of the lightguide only or within the lightguide. However, in some embodiments, at least one of the gratings is formed of two gratings arranged on opposite sides of the lightguide aligned with each other. This way, the brightness uniformity of the element can be improved. In typical embodiments, the in-coupling grating is, however, arranged on one side of the lightguide only.

In some embodiments at least one of the gratings, preferably all of the abovementioned gratings of the display element are binary gratings.

Next, embodiments of the invention and advantages thereof are discussed in more details with reference to the attached drawings.

**Brief Description of the Drawings**

Fig. 1 shows a lightguide-based diffractive display comprising a conventional grating arrangement applied to achieve a large FOV.

Fig. 2 shows a lightguide-based diffractive display comprising a grating arrangement according to one embodiment of the invention applied to achieve a large FOV.

Figs. 3A and 3B show a grating arrangement

Figs. 4A and 4B show a grating arrangemen

Figs. 5A and 5B illustrate as wave vector graphs the improvement of FOV with the aid of the invention.

**Detailed Description of Embodiments**

In the following, various implementations of a lightguide based diffractive near-to-eye display (NED) element are described that employ a bowtie-shaped EPE as two grating zones placed symmetrically around the in-coupling grating.

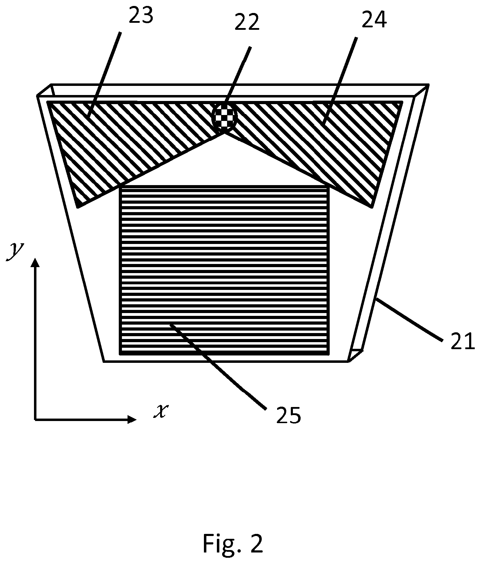

Fig. 2 shows a display element according to one embodiment. The lightguide 21 contains a doubly periodic in-coupling grating 22, two EPE gratings 23, 24 and the out-coupling grating 25. The out-coupling gratings 14, 25 in Fig.1 and Fig. 2 have exactly the same physical size for easy comparison. The embodiment exhibits a much smaller total EPE grating area with respect of the out-coupling grating size than in the solution in Fig. 1. This enables more compact design for a NED device. It can be seen that the total lightguide area required with the arrangement of Fig. 2 is much smaller.

The total footprint of the lightguide can be e.g. 75 mm by 50 mm or less, such as 50 - 70 mm by 25 - 45 mm. With the same design parameters than referred to above with respect to Fig.1 (50 degrees FOV NED display with 15 mm x 10 mm (height x width) eyebox and 20 mm eyerelief ) a 62 mm x 36 mm (height x width) lightguide is sufficient.

The gratings can be located on the first or on the second main surface of the lightguide. When gratings are on the lightguide surface on which light is first incident when coming out from a projector, the in-coupling grating 12 is a transmissive grating. When gratings are on the other main surface, the in-coupling grating 12 is a reflective grating.

In the embodiment of Fig. 2, the in-coupling grating 22 is periodic both in x- and y-directions and its nanostructure is designed so that it in-couples light mainly to +/-1 orders in the x-direction and -1 order in the y-direction. Grating vectors are ideally designed so that when a light ray out-couples from the out-coupling grating 25, the ray has the same x- and y-direction vector components as when incident on the in-coupling grating 22.

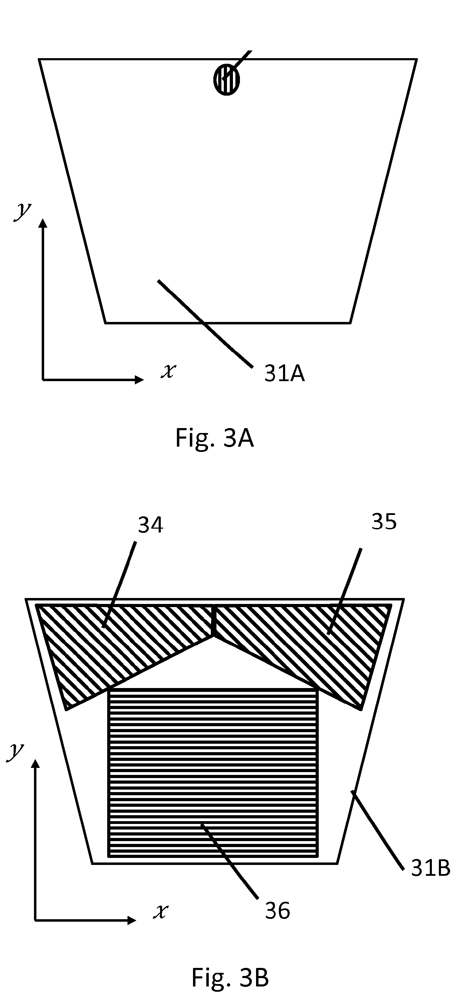

Figs. 3A and 3B shows a comparative example. The first main surface 31A of the lightguide, illustrated in Fig. 3A, contains an in-coupling grating 32 that is periodic in the x-direction. The in-coupling grating couples light to the plus and minus first transmissive diffraction order (T-1, T+1) (when light comes from the side of the grating as herein assumed). The second main surface 31B of the lightguide contains the EPE gratings 34, 35 and the out-coupling grating 36.

Rays incident on the in-coupling grating have a direction vector

$$\cdot\,\hat{k} = \left(\sin(\theta_x),\sin(\theta_y),\sqrt{1 - \sin^2\theta_x - \sin^2\theta_y}\ \right)$$

. The rays with negative $\theta_x$ travel to the eyebox, i.e., out-coupling grating, from the in-coupling grating mainly through the right EPE grating 35, while rays with positive $\theta_x$ travel through the left EPE grating 34.

In one embodiment (not shown) there are two laterally arranged sections in the in-coupling grating that are adapted to provide the splitting of the incoming light to the opposite diffraction orders.

As understood by a skilled person, in all embodiments referred to herein, the orientations the gratings with respect to each other and their other properties are suitably chosen such that the diffraction of desired wavelengths and propagation of diffracted rays as described takes place.

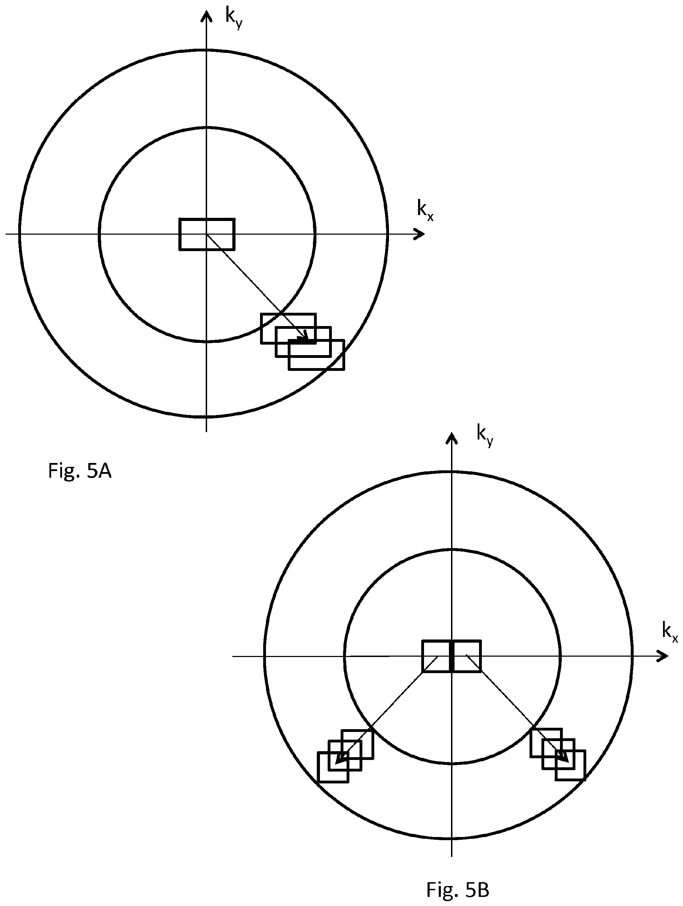

It should be noted that in the prior art solutions that utilize only a single in-coupling diffraction order, the entire FOV needs to propagate through a single EPE grating. This inherently limits the maximum FOV supported by a single lightguide. With the present invention, higher total FOV can propagate through the two EPE gratings than through a single conventional EPE. This effect is illustrated in the wave vector diagrams of Figs. 5A (conventional single diffraction order coupling) and 5B (present opposite diffraction order coupling according to one embodiment).

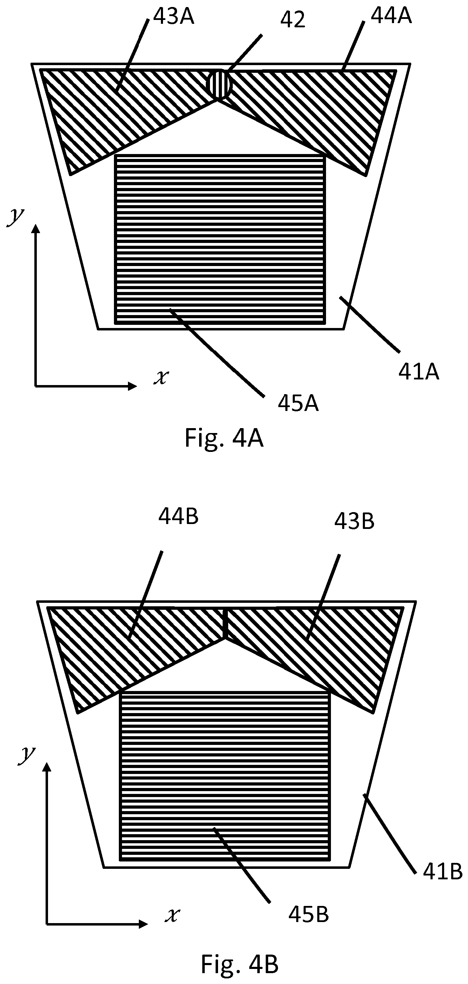

Rays that propagate with so high angles inside the lightguide that the distance between the two adjacent hit points on the same light guide surface is bigger than the in-coupling grating diameter may cause areas with lower brightness into the final image perceived by a human eye. This effect can be reduced by having EPE gratings and out-coupling gratings on both sides of the lightguide. This is illustrated in Figs. 4A and 4B that show a comparative example in which the first lightguide surface 41A contains a transmissive in-coupling grating periodic in the x-direction, first EPE gratings 43A, 44B and an out-coupling grating 45A periodic in the y-direction. The second surface 41B contains second EPE gratings 43B, 44B and an out-coupling grating 45B.

Embodiments of the present invention with different grating vectors can be stacked on top of each to further increase the field of view or operational wavelength band of the entire display element.

**Citations list**

Patent literature

US 6580529 B1
US 2016/0231568 A1

**Claims**

1. A display element for a personal display, the display element comprising

   - a lightguide (21) capable of guiding light by total internal reflections,
   - a diffractive in-coupling grating (22; 32; 42), and
   - a diffractive out-coupling grating (25; 36; 45A, 45B),
   wherein the in-coupling grating (22; 32; 42) is adapted to couple incident light directed thereto to the lightguide (21) to allow propagation of the light to the out-coupling grating (25; 36; 45A, 45B) as at least two diffraction wavefronts by diffracting light into the first positive and first negative transmission order or into the first positive and first negative reflection order, respectively, and
   the display element further comprises at least two different exit pupil expander gratings (23, 24; 34, 35; 43A, 44A, 44B, 43B) adapted to guide said wavefronts respectively to the out-coupling grating (25; 36; 45A, 45B) along different paths,
   **characterized in that** said wavefronts are adapted each to carry a partial image of a total image directed to the in-coupling grating (22; 32; 42) for increasing the maximum field of view that can propagate on the out-coupling grating (25; 36; 45A, 45B);
   the grating vector or vectors of the in-coupling grating (22; 32; 42), exit pupil expander gratings (23, 24; 34, 35; 43A, 44A, 44B, 43B) and out-coupling grating (25; 36; 45A, 45B) are chosen such that when said wavefronts are out-coupled from the lightguide (21) by the out-coupling grating (25; 36; 45A, 45B), the wavefronts have the same orthogonal wave vector components as when incident on the in-coupling grating (22; 32; 42);
   the in-coupling grating (22; 32; 42) comprises a doubly periodic grating; and
   the in-coupling grating (22; 32; 42) is periodic in two orthogonal lateral directions, so that light is in-coupled mainly to the first positive and negative orders in a first orthogonal direction and in the first positive or negative order in the other orthogonal direction.

2. The display element according to claim 1, **characterized by** that said two different exit pupil expander gratings (23, 24; 34, 35; 43A, 44A, 44B, 43B) are located laterally and essentially on opposite sides of the in-coupling grating (22; 32; 42).

3. The display element according to claim 1 or 2, **characterized in that** the out-coupling grating (25; 36; 45A, 45B) is located symmetrically with respect to the exit pupil expander gratings (23, 24; 34, 35; 43A, 44A, 44B, 43B).

4. The display element according to any of the preceding claims, **characterized in that** the exit pupil expander gratings (23, 24; 34, 35; 43A, 44A, 44B, 43B) are arranged as fan-shaped zones symmetrically with respect to the in-coupling grating (22; 32; 42).

5. The display element according to any of the preceding claims, **characterized in that** it comprises one or more further grating vectors stacked on top of each other to further increase the field of view or operational wavelength band of the display element..

6. The display element according to any of the preceding claims, **characterized in that** the grating vector of the in-coupling grating adapted to direct waves having a direction unit vector

$$\hat{k} = \left(\sin(\theta_x), \sin(\theta_y), \sqrt{1 - \sin^2\theta_x - \sin^2\theta_y}\,\right)$$ and a negative $\theta_x$ to a first exit pupil expander grating and a positive $\theta_x$ to a second exit pupil expander grating.

7. The display element according to any of the preceding claims, **characterized in that** the in-coupling grating (22; 32; 42) comprises at least two portions arranged laterally with respect to each other and having different grating line orientations and/or profiles for performing said coupling.

8. The display element according to any of the preceding claims, **characterized in that** the exit pupil expander gratings (43A, 44A, 44B, 43B) and/or the out-coupling grating (45A, 45B) comprises a first grating section arranged on one side of the lightguide and second grating section arranged on the opposite side of the lightguide, the first and second sections being aligned with each other.

9. The display element according to any of the preceding claims, **characterized in that** the in-coupling grating (22; 32; 42) is arranged on one side of the lightguide (21).

10. The display element according to any of the preceding claims, **characterized in that** it is an element for an augmented reality eyewear.

11. A personal display device, such as near-to-eye display device, comprising

- an image source for projecting an image,
- at least one diffractive display element according to any of the preceding claims for displaying the image projected to said in-coupling grating (22; 32; 42) thereof on said out-coupling grating (25; 36; 45A, 45B).

12. A method for producing an image on a personal display, the method comprising

- directing light to an in-coupling grating (22; 32; 42) arranged on a lightguide (21) capable of guiding light laterally by total internal reflections,
- guiding in-coupled light to at least one exit pupil expander grating (23, 24; 34, 35; 43A, 44A, 44B, 43B) arranged to extend the exit pupil of the display, and
- guiding light from said at least one exit pupil expander grating (23, 24; 34, 35; 43A, 44A, 44B, 43B) to an out-coupling grating (25; 36; 45A, 45B) for producing a viewable image,
wherein
- on the in-coupling grating (22; 32; 42), coupling incident light to the lightguide (21) as at least two diffraction wavefronts,
- guiding the at least two diffraction wavefronts to two different exit pupil expander gratings (23, 24; 34, 35; 43A, 44A, 44B, 43B) for extending the exit pupil of the display,
- guiding the light from the two exit pupil expander gratings along different paths to said out-coupling grating (25; 36; 45A, 45B),

**characterized in that**

said at least two diffraction wavefronts correspond to the first positive and first negative transmission order or alternatively the first positive and first negative reflection order of the in-coupling grating (22; 32; 42);
said wavefronts are each carrying a partial image of a total image directed to the in-coupling grating (22; 32; 42) for increasing the maximum field of view that can propagate on the out-coupling grating (25; 36; 45A, 45B);
the grating vector or vectors of the in-coupling grating (22; 32; 42), exit pupil expander gratings (23, 24; 34, 35; 43A, 44A, 44B, 43B) and out-coupling grating (25; 36; 45A, 45B) are chosen such that when said wavefronts are out-coupled from the lightguide (21) by the out-coupling grating (25; 36; 45A, 45B), the wavefronts have the same orthogonal wave vector components as when incident on the in-coupling grating (22; 32; 42); and
the in-coupling grating (22; 32; 42) comprises a doubly periodic grating; and
the in-coupling grating (22; 32; 42) is periodic in two orthogonal lateral directions, so that light is in-coupled mainly to the first positive and negative orders in a first orthogonal direction and in the first positive or negative order in the other orthogonal direction.

13. The method according to claim 12, wherein a display element according to any of claims 1 - 10 is used.

## Patentansprüche

1. Anzeigeelement für eine persönliche Anzeige, wobei das Anzeigeelement Folgendes umfasst:

- einen Lichtleiter (21), der dazu in der Lage ist, Licht durch Totalreflexionen zu leiten,
- ein diffraktives Einkopplungsgitter (22; 32; 42) und
- ein diffraktives Auskopplungsgitter (25; 36; 45 A, 45B),

wobei das Einkopplungsgitter (22; 32; 42) angepasst ist, um einfallendes Licht, das darauf gerichtet ist, zu dem Lichtleiter (21) zu koppeln, um eine Ausbreitung des Lichts zum Auskopplungsgitter (25; 36; 45A, 45B) als mindestens zwei Beugungswellenfronten zu ermöglichen, durch Beugen des Lichts jeweils in die erste positive und erste negative Transmissionsordnung beziehungsweise in die erste positive und erste negative Reflexionsordnung, und

das Anzeigeelement weiter mindestens zwei unterschiedliche Austrittspupillenerweiterungsgitter (23, 24; 34, 35; 43A, 44A, 44B, 43B) umfasst, die angepasst sind, um die Wellenfronten jeweils entlang unterschiedlicher Pfade zum Auskopplungsgitter (25; 36; 45A, 45B) zu leiten,

**dadurch gekennzeichnet, dass** die Wellenfronten jeweils angepasst sind, um ein Teilbild eines Gesamtbildes zu tragen, das zu dem Einkopplungsgitter (22; 32; 42) gerichtet ist, um das maximale Sichtfeld zu vergrößern, das sich auf dem Auskopplungsgitter (25; 36; 45A, 45B) ausbreiten kann;

der Gittervektor oder die Vektoren des Einkopplungsgitters (22; 32; 42), der Austrittspupillenerweiterungsgitter (23, 24; 34, 35; 43A, 44A, 44B, 43B) und des Auskopplungsgitters (25; 36; 45A, 45B) so ausgewählt sind, dass, wenn die Wellenfronten durch das Auskopplungsgitter (25; 36; 45A, 45B) aus dem Lichtleiter (21) ausgekoppelt werden, die Wellenfronten die gleichen orthogonalen Wellenvektorkomponenten aufweisen wie beim Einfall auf das Einkopplungsgitter (22; 32; 42);

das Einkopplungsgitter (22; 32; 42) ein doppelt periodisches Gitter umfasst und

das Einkopplungsgitter (22; 32; 42) in zwei orthogonalen seitlichen Richtungen periodisch ist, sodass Licht hauptsächlich in einer ersten orthogonalen Richtung zu der ersten positiven und negativen Ordnung und in der anderen orthogonalen Richtung in der ersten positiven oder negativen Ordnung eingekoppelt wird.

2. Anzeigeelement nach Anspruch 1, **dadurch gekennzeichnet, dass** die zwei unterschiedlichen Austrittspupillenerweiterungsgitter (23, 24; 34, 35; 43A, 44A, 44B, 43B) seitlich und im Wesentlichen auf entgegengesetzten Seiten des Einkopplungsgitters (22; 32; 42) angeordnet sind.

3. Anzeigeelement nach Anspruch 1 oder 2, **dadurch gekennzeichnet, dass** das Auskopplungsgitter (25; 36; 45A, 45B) symmetrisch in Bezug auf die Austrittspupillenerweiterungsgittern (23, 24; 34, 35; 43A, 44A, 44B, 43B) angeordnet ist.

4. Anzeigeelement nach einem der vorstehenden Ansprüche, **dadurch gekennzeichnet, dass** die Austrittspupillenerweiterungsgitter (23, 24; 34, 35; 43A, 44A, 44B, 43B) als fächerförmige Zonen symmetrisch in Bezug auf das Einkopplungsgitter (22; 32; 42) angeordnet sind.

5. Anzeigeelement nach einem der vorstehenden Ansprüche, **dadurch gekennzeichnet, dass** es einen oder mehrere weitere übereinander gestapelte Gittervektoren umfasst, um das Sichtfeld oder das Betriebswellenlängenband des Anzeigeelements weiter zu vergrößern.

6. Anzeigeelement nach einem der vorstehenden Ansprüche, **dadurch gekennzeichnet, dass** der Gittervektor des Einkopplungsgitters, das an direkte Wellen angepasst ist, einen Richtungseinheitsvektor

$$\hat{k} = (sin(\theta_x), sin(\theta_y), \sqrt{1 - sin^2\theta_x - sin^2\theta_y})$$ und ein negatives $\theta_x$ zu einem ersten Austrittspupillenerweiterungsgitter und ein positives $\theta_x$ zu einem zweiten Austrittspupillenerweiterungsgitter aufweist.

7. Anzeigeelement nach einem der vorstehenden Ansprüche, **dadurch gekennzeichnet, dass** das Einkopplungsgitter (22; 32; 42) mindestens zwei Abschnitte umfasst, die seitlich in Bezug aufeinander angeordnet sind und unterschiedliche Gitterlinienausrichtungen und/oder Profile zum Durchführen der Kopplung aufweisen.

8. Anzeigeelement nach einem der vorstehenden Ansprüche, **dadurch gekennzeichnet, dass** die Austrittspupillenerweiterungsgitter (43A, 44A, 44B, 43B) und/oder das Auskopplungsgitter (45A, 45B) einen ersten Gitterabschnitt, der auf der einen Seite des Lichtleiters angeordnet ist, und einen zweiten Gitterabschnitt, der auf der entgegengesetzten Seite des Lichtleiters angeordnet ist, umfassen, wobei der erste und der zweite Abschnitt miteinander ausgerichtet sind.

9. Anzeigeelement nach einem der vorstehenden Ansprüche, **dadurch gekennzeichnet, dass** das Einkopplungsgitter (22; 32; 42) auf einer Seite des Lichtleiters (21) angeordnet ist.

10. Anzeigeelement nach einem der vorstehenden Ansprüche, **dadurch gekennzeichnet, dass** es ein Element für eine Augmented-Reality-Brille ist.

11. Persönliche Anzeigevorrichtung, wie beispielsweise eine augennahe Anzeigevorrichtung, umfassend:

    - eine Bildquelle zum Projizieren eines Bildes,
    - mindestens ein diffraktives Anzeigeelement nach einem der vorstehenden Ansprüche zum Anzeigen des auf das Einkopplungsgitter (22; 32; 42) desselben projizierten Bildes auf dem Auskopplungsgitter (25; 36; 45A, 45B).

12. Verfahren zum Erzeugen eines Bildes auf einer persönlichen Anzeige, wobei das Verfahren Folgendes umfasst:

    - Leiten von Licht auf ein Einkopplungsgitter (22; 32; 42), das auf einem Lichtleiter (21) angeordnet ist, der dazu in der Lage ist, Licht durch Totalreflexionen seitlich zu leiten,
    - Leiten von eingekoppeltem Licht zu mindestens einem Austrittspupillenerweiterungsgitter (23, 24; 34, 35; 43A, 44A, 44B, 43B), das so angeordnet ist, dass es die Austrittspupille der Anzeige erweitert, und
    - Leiten von Licht von dem mindestens einen Austrittspupillenerweiterungsgitter (23, 24; 34, 35; 43A, 44A, 44B, 43B) zu einem Auskopplungsgitter (25; 36; 45A, 45B) zum Erzeugen eines sichtbaren Bildes,

    wobei

    - auf dem Einkopplungsgitter (22; 32; 42), Koppeln von einfallendem Licht als mindestens zwei Beugungswellenfronten zu dem Lichtleiter (21),
    - Leiten der mindestens zwei Beugungswellenfronten zu zwei unterschiedlichen Austrittspupillenerweiterungsgittern (23, 24; 34, 35; 43A, 44A, 44B, 43B) zum Erweitern der Austrittspupille der Anzeige,
    - Leiten des Lichts von den zwei Austrittspupillenerweiterungsgittern entlang unterschiedlicher Pfade zu dem Auskopplungsgitter (25; 36; 45A, 45B),

    **dadurch gekennzeichnet, dass**

    die mindestens zwei Beugungswellenfronten der ersten positiven und ersten negativen Transmissionsordnung oder alternativ der ersten positiven und ersten negativen Reflexionsordnung des Einkopplungsgitters (22; 32; 42) entsprechen;
    die Wellenfronten jeweils ein Teilbild eines Gesamtbildes tragen, das auf das Einkopplungsgitter (22; 32; 42) gerichtet ist, um das maximale Sichtfeld zu vergrößern, das sich auf dem Auskopplungsgitter (25; 36; 45A, 45B) ausbreiten kann,
    der Gittervektoren oder die Vektoren des Einkopplungsgitters (22; 32; 42), der Austrittspupillenerweiterungsgitter (23, 24; 34, 35; 43A, 44A, 44B, 43B) und des Auskopplungsgitters (25; 36; 45A, 45B) so ausgewählt sind, dass, wenn die Wellenfronten durch das Auskopplungsgitter (25; 36; 45A, 45B) aus dem Lichtleiter (21) ausgekoppelt werden, die Wellenfronten die gleichen orthogonalen Wellenvektorkomponenten aufweisen wie beim Einfall auf das Einkopplungsgitter (22; 32; 42); und
    das Einkopplungsgitter (22; 32; 42) ein doppelt periodisches Gitter umfasst und
    das Einkopplungsgitter (22; 32; 42) in zwei orthogonalen seitlichen Richtungen periodisch ist, sodass Licht hauptsächlich in einer ersten orthogonalen Richtung zu der ersten positiven und negativen Ordnung und in der anderen orthogonalen Richtung in der ersten positiven oder negativen Ordnung eingekoppelt wird.

13. Verfahren nach Anspruch 12, wobei ein Anzeigeelement nach einem der Ansprüche 1 bis 10 verwendet wird.

**Revendications**

1. Élément d'affichage pour un dispositif d'affichage personnel, l'élément d'affichage comprenant

   - un guide de lumière (21) capable de guider la lumière par des réflexions internes totales,
   - un réseau de couplage d'entrée diffractif (22 ; 32 ; 42), et
   - un réseau de couplage de sortie diffractif (25 ; 36 ; 45A, 45B),
   dans lequel le réseau d'entrée (22 ; 32 ; 42) est adapté pour coupler de la lumière incidente dirigée vers celui-ci au guide de lumière (21) afin de permettre la propagation de la lumière vers le réseau de couplage de sortie (25 ; 36 ; 45A, 45B) sous forme d'au moins deux fronts d'onde de diffraction en diffractant de la lumière respectivement dans le premier ordre de transmission positif et le premier ordre de transmission négatif ou dans le premier ordre de réflexion positif et le premier ordre de réflexion négatif, et
   l'élément d'affichage comprend en outre au moins deux réseaux de dilatation de pupille de sortie différents (23, 24 ; 34, 35 ; 43A, 44A, 44B, 43B) adaptés pour guider lesdits fronts d'onde respectivement vers le réseau de couplage de sortie (25 ; 36 ; 45A, 45B) le long de différents trajets,
   **caractérisé en ce que** lesdits fronts d'onde sont adaptés chacun pour transporter une image partielle d'une image totale dirigée vers le réseau de couplage d'entrée (22 ; 32 ; 42) afin d'augmenter le champ de vision maximal qui peut se propager sur le réseau de couplage de sortie (25 ; 36 ; 45A, 45B) ;
   le ou les vecteurs de réseau du réseau de couplage d'entrée (22 ; 32 ; 42), des réseaux de dilatation de pupille de sortie (23, 24 ; 34, 35 ; 43A, 44A, 44B, 43B) et du réseau de couplage de sortie (25 ; 36 ; 45A, 45B) sont choisis de telle sorte que, lorsque lesdits fronts d'onde sont couplés en sortie à partir du guide de lumière (21) par le réseau de couplage de sortie (25 ; 36 ; 45A, 45B), les fronts d'onde présentent les mêmes composantes de vecteur d'onde orthogonales que lorsqu'ils sont incidents sur le réseau de couplage d'entrée (22 ; 32 ; 42) ;
   le réseau de couplage d'entrée (22 ; 32 ; 42) comprend un réseau doublement périodique ; et
   le réseau de couplage d'entrée (22 ; 32 ; 42) est périodique dans deux directions latérales orthogonales, de sorte que de la lumière est couplée principalement aux premiers ordres positif et négatif dans une première direction orthogonale et au premier ordre positif ou négatif dans l'autre direction orthogonale.

2. Élément d'affichage selon la revendication 1, **caractérisé en ce que** lesdits deux réseaux de dilatation de pupille de sortie différents (23, 24 ; 34, 35 ; 43A, 44A, 44B, 43B) sont situés latéralement et essentiellement sur des côtés opposés du réseau de couplage d'entrée (22 ; 32 ; 42).

3. Élément d'affichage selon la revendication 1 ou 2, **caractérisé en ce que** le réseau de couplage de sortie (25 ; 36 ; 45A, 45B) est situé symétriquement par rapport aux réseaux de dilatation de pupille de sortie (23, 24 ; 34, 35 ; 43A, 44A, 44B, 43B).

4. Élément d'affichage selon l'une quelconque des revendications précédentes, **caractérisé en ce que** les réseaux de dilatation de pupille de sortie (23, 24 ; 34, 35 ; 43A, 44A, 44B, 43B) sont agencés sous la forme de zones en forme d'éventail symétriquement par rapport au réseau de couplage d'entrée (22 ; 32 ; 42).

5. Élément d'affichage selon l'une quelconque des revendications précédentes, **caractérisé en ce qu'**il comprend un ou plusieurs vecteurs de réseau supplémentaires empilés les uns sur les autres afin d'augmenter davantage le champ de vision ou la bande de longueur d'onde opérationnelle de l'élément d'affichage.

6. Élément d'affichage selon l'une quelconque des revendications précédentes, **caractérisé en ce que** le vecteur de réseau du réseau de couplage d'entrée est adapté à des ondes directes présentant un vecteur unitaire de direction

$$\hat{k} = \left(sin(\theta_x), sin(\theta_y), \sqrt{1 - sin^2\theta_x - sin^2\theta_y}\right)$$ et un vecteur négatif $\theta_x$ vers un premier réseau de dilatation de pupille de sortie et un vecteur positif $\theta_x$ vers un second réseau de dilatation de pupille de sortie.

7. Élément d'affichage selon l'une quelconque des revendications précédentes, **caractérisé en ce que** le réseau de couplage d'entrée (22 ; 32 ; 42) comprend au moins deux parties agencées latéralement l'une par rapport à l'autre et présentant des orientations et/ou profils de lignes de réseau différents pour réaliser ledit couplage.

8. Élément d'affichage selon l'une quelconque des revendications précédentes, **caractérisé en ce que** les réseaux de dilatation de pupille de sortie (43A, 44A, 44B, 43B) et/ou le réseau de couplage de sortie (45A, 45B) comprennent une première section de réseau agencée sur un premier côté du guide de lumière et une seconde section de réseau agencée sur le côté opposé du guide de lumière, les première et seconde sections étant alignées l'une avec l'autre.

9. Élément d'affichage selon l'une quelconque des revendications précédentes, **caractérisé en ce que** le réseau de couplage d'entrée (22 ; 32 ; 42) est agencé sur un premier côté du guide de lumière (21).

10. Élément d'affichage selon l'une quelconque des revendications précédentes, **caractérisé en ce qu'**il s'agit d'un élément pour des lunettes de réalité augmentée.

11. Dispositif d'affichage personnel, tel qu'un dispositif d'affichage proche des yeux, comprenant

   - une source d'image pour projeter une image,
   - au moins un élément d'affichage diffractif selon l'une quelconque des revendications précédentes pour afficher l'image projetée sur ledit réseau de couplage d'entrée (22 ; 32 ; 42) de celui-ci sur ledit réseau de couplage de sortie (25 ; 36 ; 45A, 45B).

12. Procédé de production d'une image sur un dispositif d'affichage personnel, le procédé comprenant

   - l'orientation de la lumière vers un réseau de couplage d'entrée (22 ; 32 ; 42) agencé sur un guide de lumière (21) capable de guider de la lumière latéralement par l'intermédiaire de réflexions internes totales,
   - le guidage de la lumière de couplage d'entrée vers au moins un réseau de dilatation de pupille de sortie (23, 24 ; 34, 35 ; 43A, 44A, 44B, 43B) agencé pour élargir la pupille de sortie du dispositif d'affichage, et
   - le guidage de la lumière provenant d'au moins un réseau de dilatation de pupille de sortie (23, 24 ; 34, 35 ; 43A, 44A, 44B, 43B) vers un réseau de couplage sortie (25 ; 36 ; 45A, 45B) pour produire une image visible,

   dans lequel

   - sur le réseau de couplage d'entrée (22 ; 32 ; 42), le couplage de la lumière incidente au guide de lumière (21) sous la forme d'au moins deux fronts d'onde de diffraction,
   - le guidage des au moins deux fronts d'onde de diffraction vers deux réseaux de dilatation de pupille de sortie différents (23, 24 ; 34, 35 ; 43A, 44A, 44B, 43B) pour étendre la pupille de sortie du dispositif d'affichage,
   - le guidage de la lumière à partir des deux réseaux de dilatation de pupille de sortie le long de différents trajets vers ledit réseau de couplage de sortie (25 ; 36 ; 45A, 45B),

   **caractérisé en ce que**

   lesdits au moins deux fronts d'onde de diffraction correspondent aux premiers ordres de transmission positif et négatif ou, en variante, aux premiers ordres de réflexions positif et négatif du réseau de couplage d'entrée (22 ; 32 ; 42) ;
   lesdits fronts d'onde transportent chacun une image partielle d'une image totale dirigée vers le réseau de couplage d'entrée (22 ; 32 ; 42) afin d'augmenter le champ de vision maximal qui peut se propager sur le réseau de couplage de sortie (25 ; 36 ; 45A, 45B) ;
   le ou les vecteurs de réseau du réseau de couplage d'entrée (22 ; 32 ; 42), des réseaux de dilatation de pupille de sortie (23, 24 ; 34, 35 ; 43A, 44A, 44B, 43B) et du réseau de couplage de sortie (25 ; 36 ; 45A, 45B) sont choisis de telle sorte que, lorsque lesdits fronts d'onde sont couplés en sortie à partir du guide de lumière (21) par le réseau de couplage de sortie (25 ; 36 ; 45A, 45B), les fronts d'onde présentent les mêmes composantes de vecteur d'onde orthogonales que lorsqu'ils sont incidents sur le réseau de couplage d'entrée (22 ; 32 ; 42) ; et
   le réseau de couplage d'entrée (22 ; 32 ; 42) comprend un réseau doublement périodique ; et
   le réseau de couplage d'entrée (22 ; 32 ; 42) est périodique dans deux directions latérales orthogonales, de sorte que de la lumière est couplée principalement aux premiers ordres positif et négatif dans une première direction orthogonale et au premier ordre positif ou négatif dans l'autre direction orthogonale.

13. Procédé selon la revendication 12, dans lequel un élément d'affichage selon l'une quelconque des revendications 1-10 est utilisé.

Fig. 1

Fig. 2

Fig. 3A

Fig. 3B

Fig. 4A

Fig. 4B

Fig. 5A

Fig. 5B

**EP 3 619 569 B1**

**Patent documents cited in the description**

- US 6580529 B1
- US 20160231568 A1